# EUROPEAN PATENT APPLICATION

(11) **EP 2 184 508 A1**
(43) Date of publication of application: **12.05.2010**
(21) Application number: 08826679.6
(22) Date of filing: 21.07.2008
(51) Int. Cl.: F16F 1/36

(54) **ELASTOMER STRUCTURE**

(30) Priority: 01.08.2007 CN 200710129653
(71) Applicant: Huang, Tancheng, Taiwan (CN)
(72) Inventor: Huang, Tancheng, Taiwan (CN)
(74) Representative: Chaillot, Geneviève
(86) International application number: PCT/CN2008/071705
(87) International publication number: WO 2009/015582

(57) **Abstract**

A resilient structure includes an inner blocking unit 10, an outer blocking unit 20, and an elastomer unit 30. A pressured section 11 is disposed on an outer surface of the inner blocking unit 10. A securing portion 12 is disposed on an inner surface of the pressured section 11. Another pressured section 21 is disposed on an outer surface of the outer blocking unit 20. Another securing portion 22 is disposed on an inner surface of the pressured section 21. Pressure resisting sections 31/32 are respectively disposed on an inner and an outer end of the elastomer unit 30. The pressure resisting sections 31/32 are respectively confined by the securing portions 12/22 disposed on the blocking units 10/20. A pressure-release portion 33 is formed between the pressure resisting sections 31/32 of the elastomer unit 30. The pressure-release portion 33 absorbs pressure and store resilient force for elastic recovery.

## Description

### 1. Field of the Invention

The present invention relates to a resilient structure, and more particularly, to a resilient structure comprises an inner blocking unit, an outer blocking unit, and an elastomer unit. By using a securing portion disposed on the inner blocking unit, a pressure-resisting section disposed on an inner end of the elastomer unit is confined; by using a securing portion disposed on the outer blocking unit, a pressure-resisting section disposed on an outer end of the elastomer unit is confined. When the resilient structure is pressured, a pressure-release portion of the elastomer unit absorbs an external pressure and stores a resilient force for elastic recovery.

### 2. Description of Related Art

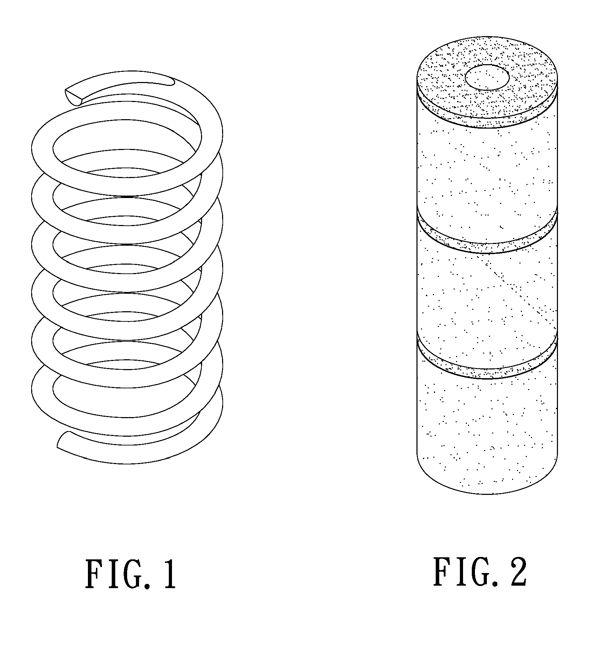

Referring to Figs 1 and 2, two conventional resilient structures commonly known to the public are: metallic coil spring (as shown in Fig. 1) and rubber resilient unit (as shown in Fig. 2). Both of these resilient structures are widely applied in different fields.

The conventional metallic coil spring as shown in Fig. 1 has been widely used in many products and device, however, the conventional metallic coil spring has the following drawbacks:
First of all, the metallic coil spring is made from heavy-weighted metallic material, therefore, for product that requires light weight, the weight of the metallic coil spring can be very bothersome to product designers and users.
Secondly, the manufacturing procedure of the metallic coil spring is usually: wound in a helix form, heat-treatment, shot peening, grinding on both ends, and pre-loading. Therefore, the process is complicated and time is costed. Furthermore, the metallic coil spring is magnetic conductive, and is not adaptable to all products.

To overcome the above mentioned drawbacks of the metallic coil spring, the rubber resilient unit as shown in Fig. 2 has been developed. The rubber resilient unit uses its deformability to absorb pressure and to store resilient force for elastic recovery; however, the rubber resilient unit also has the following drawbacks:
Firstly, an extent of compression of the rubber resilient unit is relatively small compares to a length of the rubber resilient unit, therefore, when a greater extent of compression is required, the length of the rubber resilient unit has to be increased or a plurality of resilient units is required, thereby a size of the resilient unit is expanded, also a total weight of the resilient unit is increased.
Secondly, the rubber resilient unit absorbs pressure from its circumferential lateral surfaces when being compressed, the compression stroke of the rubber resilient unit is relatively short, and due to a shape deformation when the resilient unit compressed, the rubber resilient unit is incapable to release the pressure absorbed; therefore, the short compression stroke causes the circumferential lateral surface of the rubber resilient unit to expand or bulge, and eventually causing the circumferential lateral surface to crack due to overly-deformed.
Last, an elastic load of the rubber resilient unit is directly proportional to a cross-sectional area and density of the rubber resilient unit. It has been test proven that, when grooves are formed on a periphery of the rubber resilient unit, or a through hole is radially defined in the rubber resilient unit for accommodating deformation, an increment to the compression stroke is poor, yet the elastic load of the rubber resilient unit is substantially decreased.

In order to overcome the above mentioned drawbacks of conventional resilient structures, the present invention has arisen.

The main objective of the present invention is to provide a resilient structure with increased elastic load, increase the compression rate relative to a length of the elastomer unit, increment to compression stroke, reduction in size and weight, and extension in useful life.

To achieve the objective, the resilient structure in accordance with the present invention comprises an inner blocking unit, an outer blocking unit, and an elastomer unit. By applying securing portions disposed on an outer surface of the inner blocking unit and the outer blocking unit, pressure resisting sections respectively disposed on an inner and outer end of the elastomer unit are confined. Thereby the elastic load of the present invention is increased. In addition, a pressure-release portion formed in the elastomer unit provides a compression space, which significantly increases the compression stroke and a compression rate relative to a length of the resilient structure of the present invention. The pressure-release portion also absorbs pressure and stores resilient force for elastic recovery.

A second advantage of the present invention is that the size and weight of the present invention are reduced compare to that of the conventional resilient structures. Compare to the conventional rubber resilient unit, the compression stroke of the present invention is significantly increased, and the compression rate relative to a length of the resilient structure is also increased. Thereby, the size of the resilient structure in accordance with the present is reduced. In addition, the elastomer unit of the present invention is made from elastic rubber material or elastic plastic material. The weight of the present invention is comparatively lighter to that of the conventional metallic coil spring. Therefore, by comparing the conventional rubber resilient units and metallic coil spring with the present invention, it can be concluded that the present invention has a structure which is light-weighted and small in size.

A third advantage of the present invention is that it does not crack easily, and therefore the useful life of the present invention is prolonged. The pressure-release portion of the present invention provides a compression space for accommodating the inner and outer blocking units when the inner and the outer blocking units are pressured, and the pressure-release portion also provides a room for accommodating compression and deformation of the elastomer unit. Therefore, when the elastomer unit is compressed, it is not deformed, and does not crack easily. The useful life is thereby prolonged.

A fourth advantage is that the resilient structure in accordance with the present invention can be used individually or more than one resilient structures can be applied simultaneously by stacking the resilient structures together to effectively increase the compression stroke of the present invention.

Furthermore, each of the inner blocking unit, the outer blocking unit and the elastomer unit is an individual element that can be manufactured separately. The inner and outer blocking units are used to respectively confine the pressure resisting sections disposed on the inner and outer end of the elastomer unit; such that the when pressured sections disposed on the inner and outer blocking units are compressed, the elastomer unit absorbs the pressure and stores resilient force for elastic recovery.

The inner blocking unit, outer blocking unit, and the elastomer unit are combined by applying a pre-arranged method (i.e. by adhering, tightening press fitting, hot embossing, integrally-injection ...etc), or the elements can be combined by merely abutting against each other.

On the other hand, a double injection method may also be applied, such that the inner blocking unit, the outer blocking unit, and the elastomer unit form an integral part. The inner blocking unit and the outer blocking unit are made by plastic injection molding using hard plastic material, and the elastomer unit is also injection-molded in the same molding, such that the hard plastic material and the elastomer unit are integrally formed.

In addition, a buckling portion can be formed on a connecting surface of the resilient structure in accordance with the present invention. Each buckling portion of the resilient structure includes a plurality of male and female buckles, such that when more than one resilient structure is stackingly combined, the male and female buckles of the resilient structures are meshed to ensure the resilient structures are firmly combined.

When more than one resilient structure in accordance with the present invention are stackingly combined, a guiding post axially passes through an inner hole defined in the inner blocking units, and a guiding tube sleeves on an outer periphery of the outer blocking units for confining the inner blocking units and the outer blocking units from biasing when the inner and outer blocking units are compressed. A plurality of resisting units is respectively disposed on an outer periphery of the inner hole of the inner blocking units and a surface of the outer periphery of the outer blocking units. Therefore, by a support of the guiding post and the guiding tube, and a friction of the resisting units, the resilient structures are steadily positioned when they are compressed, thereby the resilient structures are smoothly functioned.

Last, configurations of the inner blocking unit, outer blocking unit, and the elastomer unit in accordance with the present invention can be freely configured to different shapes to adapt to different products.

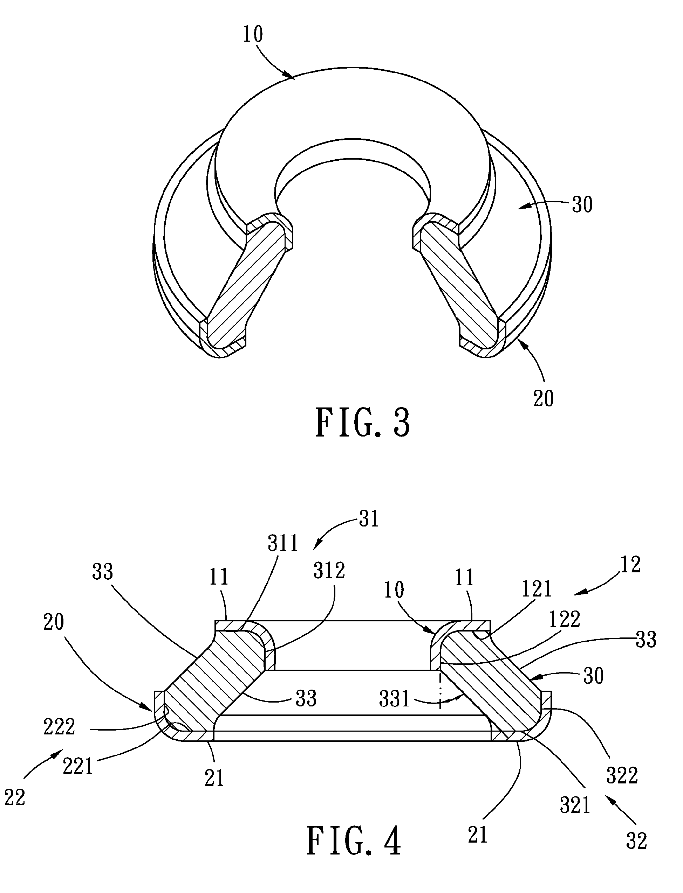

In the drawings:
Fig. 1 is a perspective view of a metallic coil spring in accordance with the prior art;
Fig. 2 is a perspective view of a rubber resilient unit in accordance with the prior art;
Fig. 3 is a partially cross-sectional perspective view of a resilient structure in accordance with the present invention;
Fig. 4 is a cross-sectional view to show the resilient structure in accordance with the present invention;
Figs. 5-6 are cross-sectional views to show a pressure-release portion of the resilient structure in accordance with the present invention, wherein the pressure-release portion is in a curve;
Fig. 7 is a partially cross-sectional perspective view to show a buckling portion of the resilient structure in accordance with the present invention;
Fig. 8 is a cross-sectional view to show the buckling portion of the resilient structure in accordance with the present invention;
Fig. 9 is a cross-sectional view to show a plurality of resilient structures in accordance with the present invention, wherein the plurality of resilient structures are stackingly combined via the buckling portions;
Fig. 10 is a cross-sectional view to show inner blocking units and outer blocking units of the resilient structure in accordance with the present invention, wherein the inner and outer blocking units are in corresponding T-shapes;
Fig. 11 is a cross-sectional view to show a plurality of resisting units disposed on the resilient structures in accordance with the present invention;
Fig. 12 is a cross-sectional view to show the inner blocking unit co-operating with an elastomer unit of the resilient structure in accordance with the present invention;
Fig. 13 is a cross-sectional view to show the outer blocking unit co-operating with the elastomer unit of the resilient structure in accordance with the present invention;
Fig. 14 is a cross-sectional view to show the elastomer unit of the resilient structure in accordance with the present invention;
Fig. 15 is an exploded perspective view to show an eleventh embodiment of the resilient structure in accordance with the present invention;
Fig. 16 is a plane view to show the eleventh embodiment of the resilient structure in accordance with the present invention; and
Fig. 17 is a cross-sectional view to show the eleventh embodiment of the resilient structure in accordance with the present invention;
Referring to Figs.3-4, a resilient unit in accordance with the present invention comprises an inner blocking unit 10, an outer blocking unit 20, and an elastomer unit 30. The inner blocking unit 10 is made from hard material. A pressured section 11 is disposed on an outer surface of the inner blocking unit 10 for bearing operating pressure. A securing portion 12 is disposed on an inner surface of the pressured section 11. The securing portion 12 includes a first securing portion 121 and a second securing portion 122.

The outer blocking unit 20 is made from hard material. Another pressured section 21 is disposed on an outer surface of the outer blocking unit 20 for bearing operating pressure. Another securing portion 22 is disposed on an inner surface of the pressured section 11. The other securing portion 22 includes a third securing portion 221 and a fourth securing portion 222.

The elastomer unit 30 is made from elastic plastic material or elastic rubber-type material. A pressure resisting section 31 is disposed on a surface of an inner end of the elastomer unit 30. The pressure resisting section 31 includes a first pressure resisting section 311 and a second pressure resisting section 312. The first and second pressure resisting sections 311/312 respectively abut against the first and second securing portions 121/122 disposed on the inner blocking unit 10. Another pressure resisting section 32 is disposed on a surface of an outer end of the elastomer unit 30. The other pressure resisting section 32 includes a third pressure resisting section 321 and a fourth pressure resisting section 322. The third and fourth pressure resisting sections 321/322 respectively abut against the third and fourth securing portions 221/222 disposed on the outer blocking unit 20.

A pressure-release portion 33 is formed between the pressure resisting sections 31/32 of the elastomer unit 30. The pressure-release portion 33 has an inclination 331 respective to the pressured sections 11 21 disposed on the inner and outer blocking units 10/20. When the inner blocking unit 10, outer blocking unit 20, and the elastomer unit 30 are combined, the inclination 331 of the pressure-release portion 33 provides a compression space for accommodating the inner blocking unit 10, outer blocking unit 20, and the elastomer unit 30 when they are pressured. The pressure-release portion 33 also provides a room for accommodating compression and deformation of the elastomer unit 30. Changes in a length of the pressure-release portion 33 changes a compression stroke of the resilient structure. A size and a thickness of the pressure-release portion 33 adjust an elastic load of the resilient structure.

The pressure resisting sections 31/32 disposed on the inner and outer end of the elastomer unit 30 respectively abut against the securing portions 12/22 disposed on the surfaces of the inner and outer blocking units 10/20. When an external pressure is exerted on the pressured sections 11/21, the inner blocking unit 10 and the outer blocking unit 20 are drawn close to each other. Due to the pressure resisting sections 31/32 are respectively confined by the securing portions 12/22 disposed on the inner and outer blocking units 10/20, the pressure-release portion 33 absorbs the external pressure and stores a resilient force for elastic recovery. When the external pressure is lowered or has disappeared, the resilient forced for elastic recovery stored in the pressure-release portion 33 pushes the inner and outer blocking units 10/20 to retrieve to their initial states. In the present embodiment, the pressure transmits from the pressured sections 11/21 to the pressure-release portion 33, such that the pressure-release portion 33 absorbs the pressure and stores resilient force for elastic recovery. Therefore, the present invention provides an improved resilient structure with the following advantages: pressure-absorbing, increases elastic load, has a better resilient force for elastic recovery, light-weighted, small in size, and has a long compression stroke.

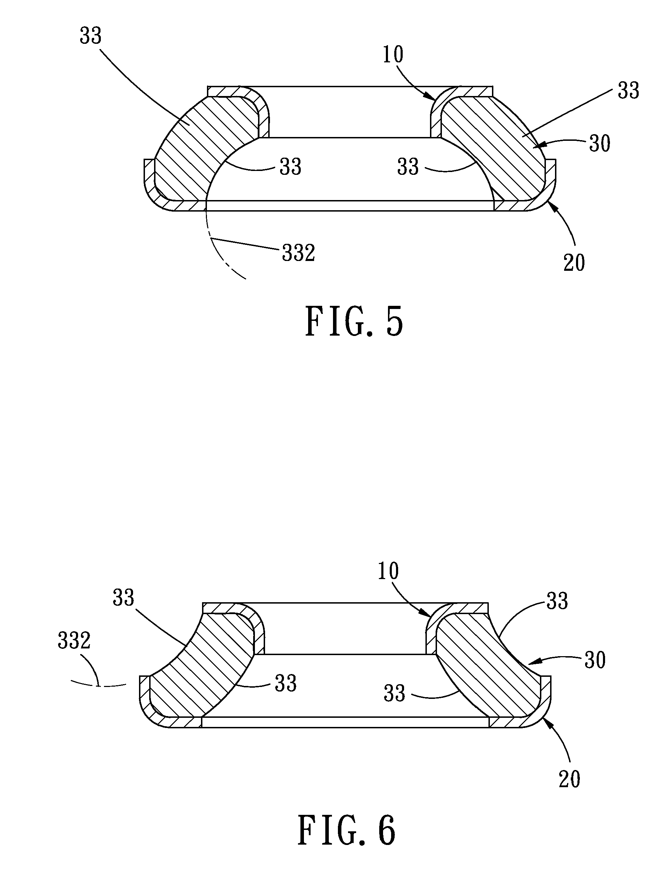

With reference to Fig.5 to Fig.6, that shows a second embodiment of the resilient structure in accordance with the present invention. The elements and effects of the second embodiment which are the same with the first embodiment are not described, only the differences are described. In this embodiment, the inclination 331 of the pressure-release portion 33 is substituted with a curve 332.

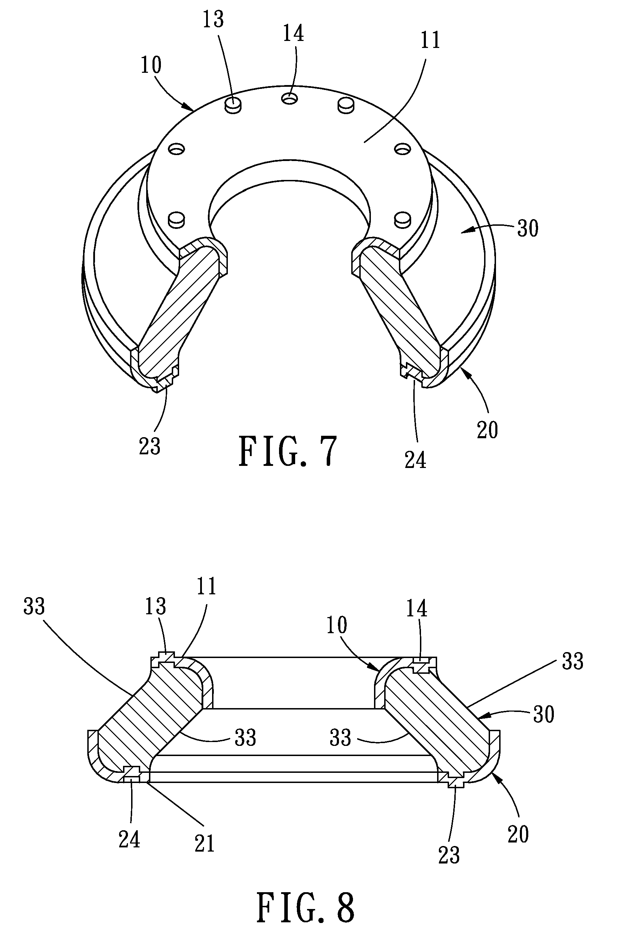

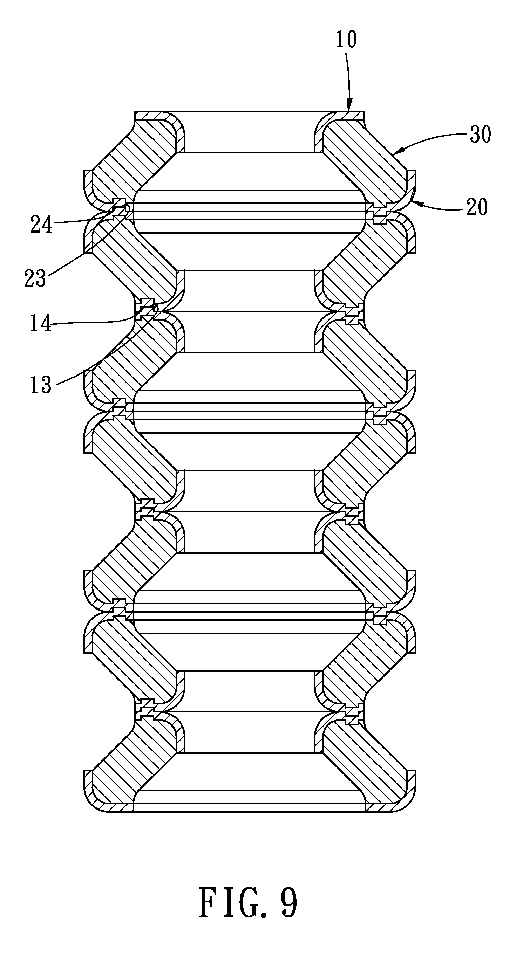

With reference to Fig.7 to Fig. 9, that shows a third embodiment of the resilient structure in accordance with the present invention. The elements and effects of the third embodiment which are the same with the first embodiment are not described, only the differences are described. In this embodiment, the inner blocking unit 10 and the outer blocking unit 20 each has a buckling portion (not numbered) disposed on an outer surface thereof. Each buckling portion includes a plurality of male buckles 13 and a plurality female buckles 14. When more than one resilient structure in accordance with the present invention is applied, the resilient structures are stackingly combined via the buckling portion.

In this embodiment, the male buckles 13 and female buckles 14 are alternately disposed on the pressured section 11 of the inner blocking unit 10. Thereby, the inner blocking units 10 are freely stacked via the male and female buckles 13/14, such that more than one resilient structures can be combined. In addition, the male buckles 13 and female buckles 14 are alternately disposed on the pressured section 21 of the outer blocking unit 20. Thereby each of the inner blocking units 10 and the outer blocking units 20 are stackingly combined via the male and female buckles 13/14, such that more than one resilient structure can be freely stacked to increase a quantity of the resilient structures that are applied.

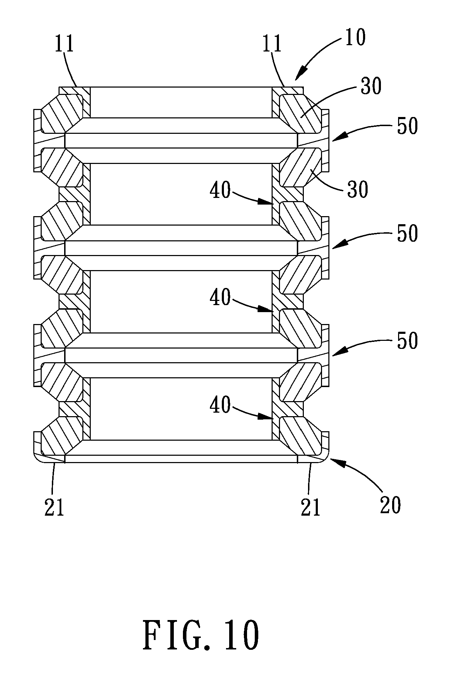

With reference to Fig. 10, that shows a fourth embodiment of the resilient structure in accordance with the present invention. The elements and effects of the fourth embodiment which are the same with the first embodiment are not described, only the differences are described. In this embodiment, the inner and outer blocking units 10/20 are adapted to have various shapes. A transversal cross-sectional shape of the inner blocking 40 unit is a T-Shape. A transversal cross-sectional shape of the outer blocking unit 50 is a T-shape corresponding to the shape of the inner blocking unit 40. Two elastomer units 30 are respectively secured by applying only one inner blocking unit 40 and one outer blocking unit 50. In addition, two pressured sections 11/21 are respectively disposed on the surfaces of the inner blocking unit 10 and the outer blocking unit 10 which are respectively disposed on two ends of a stacked resilient structure. Thereby, elements required for comprising the resilient structure is reduced.

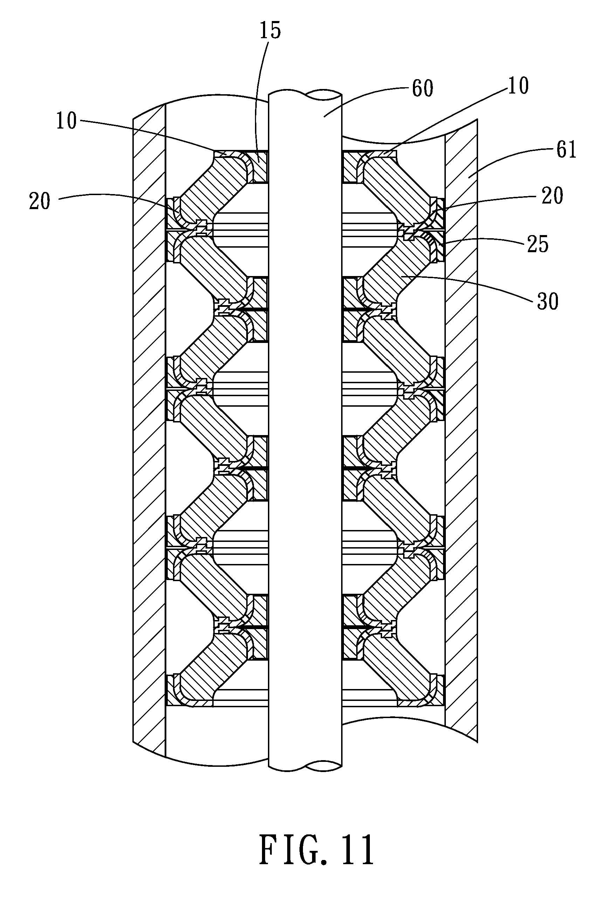

With reference to Fig.11, that shows a fifth embodiment of the resilient structure in accordance with the present invention. The elements and effects of the fifth embodiment which are the same with the first embodiment are not described, only the differences are described. In this embodiment, the resilient structure is adapted to apply on different products, and the resilient structure is therefore disposed in a reserved space in the product. A guiding post 60 is disposed in the reserved space. The inner blocking unit 10 has an inner hole (not numbered) defined therein. The guiding post 60 axially passes through the inner hole. A guiding tube 61 is also disposed in the reserved space. A plurality of resisting units 15 abuts against the guiding post 60 and the inner blocking units 10. Another plurality of resisting units abuts against the outer blocking units 20 and an inner periphery of the guiding tube 61. The guiding tube 61 sleeves on the outer peripheries of the outer blocking units 20. The resisting units 15/25 are wear-resistant, such that the guiding post 60 and guiding tube 61 smoothly friction with the resilient structure during operating state. By a co-operation with the guiding post 60 and the guiding tube 61, the stacked resilient structures are stabilized in the operating state.

In addition to the previous embodiment, a sixth embodiment of the resilient structure in accordance with the present invention is hereby described. The elements and effects of the sixth embodiment which are the same with the first embodiment are not described, only the differences are described. In this embodiment, a method for combining the inner blocking unit 10, the outer blocking unit 20, and the elastomer unit 30 is described. A fist step is to place the inner blocking unit 10 and the outer blocking unit 20 in an injection-mold. Then the inner blocking unit 10 and the outer blocking unit 20 are integrally injection-molded with the elastomer unit 30.

In addition to the previous embodiment, a seventh embodiment of the resilient structure in accordance with the present invention is hereby described. The elements and effects of the seventh embodiment which are the same with the first embodiment are not described, only the differences are described. In this embodiment, the inner blocking unit 10, the outer blocking unit 20, and the elastomer unit 30 are simultaneously formed by integrally-injection molding. In addition, the resisting units 15/25 are respectively formed on an inner periphery of the inner blocking unit 10 and an outer periphery of the outer blocking unit 20 by inj ection-molding.

In addition to the previous embodiment, an eighth embodiment of the resilient structure in accordance with the present invention is hereby described. The elements and effects of the eighth embodiment which are the same with the first embodiment are not described, only the differences are described. In this embodiment, the inner blocking unit 10, the outer blocking unit 20, and the elastomer unit 30 are integrally formed by a double-injection method in a mold. The resisting units 15/25 respectively disposed on the inner periphery of the inner blocking unit 10 and the outer periphery of the outer blocking unit 20 are also integrally formed with the inner blocking unit 10, the outer blocking unit 20, and the elastomer unit 30.

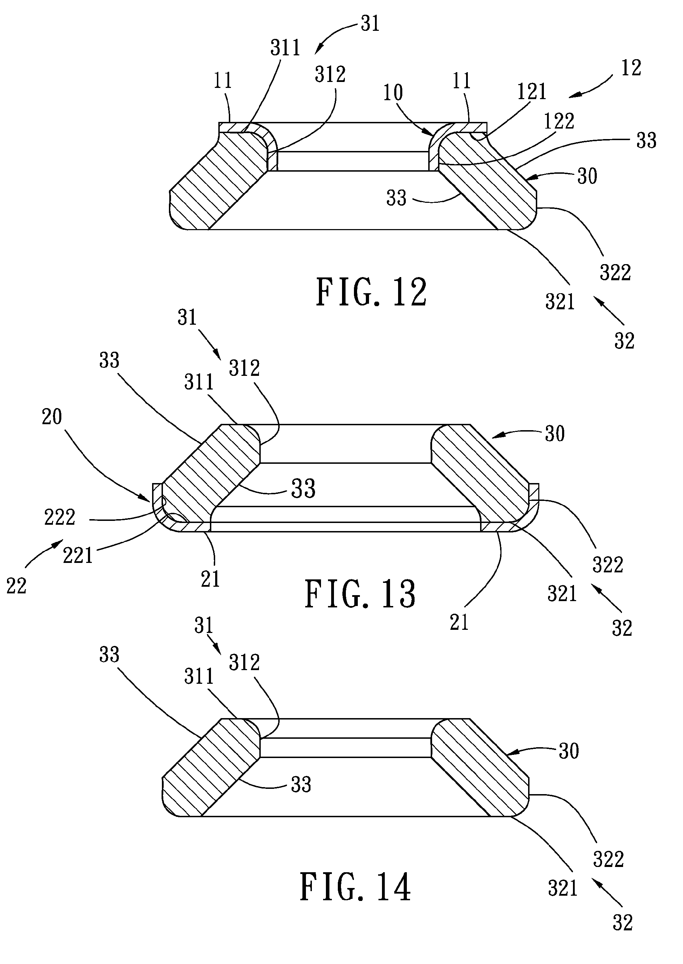

With reference to Fig.12, that shows a ninth embodiment of the resilient structure in accordance with the present invention. The elements and effects of the ninth embodiment which are the same with the first embodiment are not described, only the differences are described. In this embodiment, when applying the present invention on products requiring lower elastic load, the pressure resisting section 31 disposed on the inner end of the elastomer unit 30 is confined by the securing portion 12 disposed on the inner blocking unit 10. The third pressure resisting section 321 disposed on the outer end of the elastomer unit 30 receives the external pressure. The external pressure transmits from the pressured section 11 disposed on the inner blocking unit 10 and the third pressure resisting section 321 disposed on the inner end of the elastomer unit 30 to the pressure-release portion 33 formed in the elastomer unit 30, such that the pressure-release unit 33 absorbs the external pressure and stores resilient force for elastic recovery. Further referring to Fig.13, the pressure resisting section 32 disposed on the outer end of the elastomer unit 30 is confined by the securing portion 22 disposed on the outer blocking unit 20. The first pressure resisting section 311 disposed on the inner end of the elastomer unit 30 receives external pressure. The external pressure transmits from the pressured section 21 disposed on the outer blocking unit 20 and the first pressure resisting section 311 to the pressure-release portion 33 of the elastomer unit 30, such that the pressure-release portion 33 absorbs the external pressure and store resilient force for elastic recovery. In this embodiment, one of the pressure resisting sections 31/32 disposed on the inner or outer end of the elastomer unit 30 is not confined by the corresponding securing portions 12/22. Such that the elastic load of the elastomer unit 30 is lowered.

With reference to Fig.14, that shows a tenth embodiment of the resilient structure in accordance with the present invention. The elements and effects of the tenth embodiment which are the same with the first embodiment are not described, only the differences are described. In this embodiment, when applying the resilient structure in accordance with the present invention on products requiring even lower elastic load, both the pressure resisting sections 31/32 disposed on the inner and outer end of the elastomer unit 30 are not confined by the corresponding securing portions 12/22. The external pressure transmits from the first and the third pressure resisting sections 311/321 to the pressure-release portion 33 of the elastomer unit 30, such that the pressure-release portion 33 absorbs the external pressure and stores resilient force for elastic recovery.

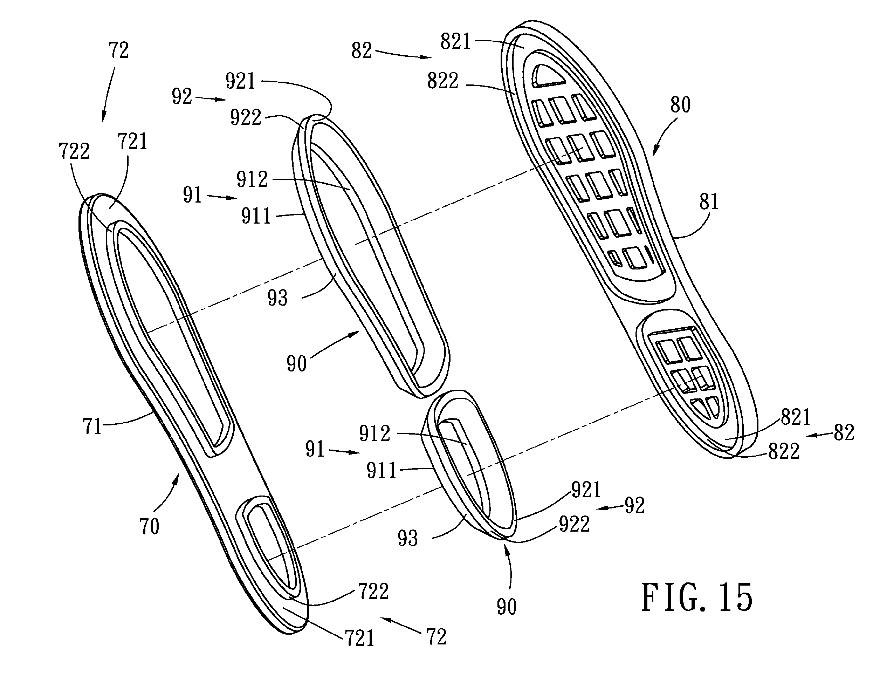

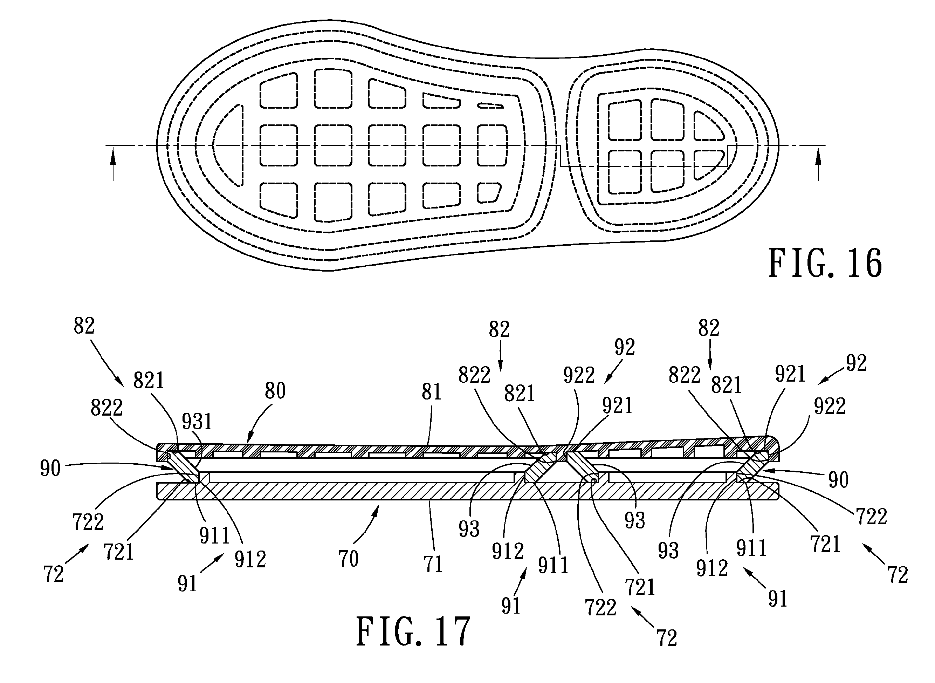

With reference to Fig.15-17, that shows an eleventh embodiment of the resilient structure in accordance with the present invention. The elements and effects of the eleventh embodiment which are the same with the first embodiment are not described, only the differences are described. In this embodiment, the inner blocking unit 10, the outer blocking unit 20, and the elastomer unit 30 are configured to various shapes to adapt to different products. Only one configuration is described hereinbelow.

In the present embodiment, the inner blocking unit 70, the outer blocking unit 80, and the elastomer unit 90 are configured to co-ordinate with a shape of a shoe. The pressured section 71 is disposed on an outer peripheral portion (not numbered) of the inner blocking unit 70. The securing portions 72 are disposed in an interior of the inner blocking unit 70. Each of the securing portions 72 includes a first securing portion 721 and a second securing portion 722.

The other pressured section 81 is disposed on an outer peripheral portion (not numbered) of the outer blocking unit 80. The securing portions 821/822 are disposed in an interior of the outer blocking unit 80. Each of the securing portions 821/822 includes a third securing portion 821 and a fourth securing portion 822.

A pressure resisting section 91 is disposed on the surface of the inner end of the elastomer unit. The pressure resisting section 91 includes a first pressure resisting section 911 and a second pressure resisting section 912. The first and the second pressure resisting sections 911/912 respectively abut against the first and the second securing portions 721/722 disposed on the inner blocking unit 70.

Another pressure resisting section 92 is disposed on the surface of the outer end of the elastomer unit 90. The pressure resisting section 92 includes a third pressure resisting section 921 and a fourth pressure resisting section 922. The third and the fourth pressure resisting sections 921/922 respectively abut against the third and fourth securing portions 821/822 disposed on the outer blocking unit 80.

The pressure-release portion 93 is formed between the pressure-resisting sections 92 disposed on the inner and outer ends of the elastomer unit 90. The pressure-release portion 93 has an inclination 931 respective to the pressured sections 71/81 disposed on the inner and outer blocking units 70/80. The inclination 931 of the pressure-release portion 93 provides a compression space for accommodating the inner blocking unit 70, outer blocking unit 80, and the elastomer unit 90 when they are pressured. When the external pressure is exerted, the pressure-release portion 93 absorbs the external pressure and stores resilient force for elastic recovery.

The present embodiment provides a shock-absorbing and elastic recovery effects to the shoe, such that a comfort is enhanced and a lifting motion of a leg is easier when a user wears the shoe.

In the embodiment previously described, a cross-sectional configuration of the pressure-release portion 93 in accordance with the present invention can be: oblique line, curve line, straight line, or score line.

In view of the above description, it can be concluded that the present invention may be applied individually, or the user may freely apply more than one resilient structure in accordance with the present invention by simply stacking the resilient structures together. In addition, the present invention not only provides an enhanced pressure absorbing effect, but also provides a better elastic recovery, increases elastic load and compression stroke, light in weight, small in size, and has a long usage life.

## Claims

1. A resilient structure comprising an elastomer unit, **characterized in that**:
the elastomer unit made from elastic plastic material or elastic rubber material; a pressure resisting section disposed on a surface of an inner end of the elastomer unit; another pressure resisting section disposed on a surface of an outer end of the elastomer unit; a pressure-release portion formed between the pressure resisting sections of the inner and the outer end of the elastomer unit;
wherein when the pressure resisting sections of the inner end and outer end of the elastomer unit are pressured, the pressure-release portion absorbs a pressure and stores a resilient force for an elastic recovery.

2. The resilient structure as claimed in claim 1, wherein the pressure-release portion has an inclination respective to the pressure resisting sections disposed on the inner end and outer end of the elastomer unit; wherein when the pressure-release portion is pressured, the inclination allows the pressure-release portion to compress and deform.

3. The resilient structure as claimed in claim 1, wherein the pressure-release portion has a cross-sectional shape configured in oblique lines, curve lines, straight lines, or score lines.

4. The resilient structure as claimed in claim 1, wherein the pressure resisting section disposed on the surface of the inner end of the elastomer unit includes a first pressure resisting section and a second pressure resisting section; and
the other pressure resisting section disposed on the surface of the outer end of the elastomer unit includes a third pressure resisting section and a fourth pressure resisting section.

5. A resilient structure comprising an inner blocking unit and an elastomer unit, **characterized in that**:
the inner blocking unit having a pressured section disposed on an outer surface thereof; a securing portion disposed on an inner surface of the pressured section; and
the elastomer unit connected with the inner blocking unit, the elastomer unit made from elastic plastic material or elastic rubber material, a pressure resisting section disposed on a surface of an inner end of the elastomer unit; another pressure resisting section disposed on a surface of an outer end of the elastomer unit; the pressure resisting section disposed on the inner end of the elastomer unit being confined by the securing portion disposed on the surface of the inner blocking unit; a pressure-release portion formed between the pressure resisting sections disposed on the inner and outer ends of the elastomer unit;
wherein when the pressure resisting sections disposed on the inner end and outer end of the elastomer unit are pressured, the pressure-release portion absorbs a pressure and stores a resilient force for an elastic recovery.

6. The resilient structure as claimed in claim 5, wherein the pressure-release portion has an inclination respective to the pressured section disposed on the outer surface of the inner blocking unit and the other pressure resisting section disposed on the surface of the outer end of the elastomer unit; wherein when the pressure-release portion is pressured, the inclination allows the pressure-release portion to compress and deform.

7. A resilient structure comprising an outer blocking unit and an elastomer unit, **characterized in that**:
the outer blocking unit having a pressured section disposed on an outer surface thereof; a securing portion disposed on an inner surface of the pressured section; and
the elastomer unit connected with the outer blocking unit, the elastomer unit made from elastic plastic material or elastic rubber material, a pressure resisting section disposed on a surface of an inner end of the elastomer unit; another pressure resisting section disposed on a surface of an outer end of the elastomer unit; the other pressure resisting section disposed on the outer end of the elastomer unit being confined by the securing portion disposed on the inner surface of the outer blocking unit; a pressure-release portion formed between the pressure resisting sections disposed on the surfaces of the inner and outer ends of the elastomer unit;
wherein when the pressure resisting sections of the inner end and outer end of the elastomer unit are pressured, the pressure-release portion absorbs a pressure and stores a resilient force for an elastic recovery.

8. The resilient structure as claimed in claim 7, wherein the pressure-release portion has an inclination respective to the pressured section disposed on the outer surface of the outer blocking unit and the pressure resisting section disposed on the surface of the inner end of the elastomer unit; wherein when the pressure-release portion is pressured, the inclination allows the pressure-release portion to compress and deform.

9. A resilient structure comprising an inner blocking unit, an outer blocking unit, and an elastomer unit, **characterized in that**:
the inner blocking unit having a pressured section disposed on an outer surface thereof; a securing portion disposed on an inner surface of the pressured section;
the outer blocking unit having a pressured section disposed on an outer surface thereof; a securing portion disposed on an inner surface of the pressured section; and
the elastomer unit interposed between the securing portions of the inner and outer blocking units, the elastomer unit being made from elastic plastic material or elastic rubber material; a pressure resisting section disposed on a surface of an inner end of the elastomer unit; another pressure resisting section disposed on a surface of an outer end of the elastomer unit; the other pressure resisting section disposed on the outer end of the elastomer unit being confined by the securing portion disposed on the inner surface of the outer blocking unit; a pressure-release portion formed between the pressure resisting sections disposed on the inner and outer ends of the elastomer unit;
wherein when the pressure sections of the inner end and outer end of the elastomer unit are pressured, the pressure-release portion absorbs a pressure and stores a resilient force for an elastic recovery.

10. The resilient structure as claimed in claim 9, wherein the pressure-release portion has an inclination respective to the pressured sections disposed on the outer surfaces of the inner blocking unit and the outer blocking unit; wherein when the pressure-release portion is pressured, the inclination allows the pressure-release portion to compress and deform.
